# EUROPÄISCHE PATENTSCHRIFT

(11) **EP 2 371 682 B1**
(45) Veröffentlichungstag und Bekanntmachung des Hinweises auf die Patenterteilung: **10.05.2017**
(21) Anmeldenummer: 11160719.8
(22) Anmeldetag: 31.03.2011
(51) Int. Cl.: B62D 35/00, B60K 11/00

(54) **Kühlluftführung**
Cool air guide
Conduite d'air froid

(30) Priorität: 01.04.2010 DE 102010003635
(43) Veröffentlichungstag der Anmeldung: 05.10.2011
(73) Patentinhaber: MAHLE Behr GmbH & Co. KG, 70469 Stuttgart (DE)
(72) Erfinder: Pantow, Eberhard, 71364 Winnenden (DE); Hentschel, Gunther, 73066 Uhingen (DE); Pfister, Florian, 71706 Markgröningen (DE)
(74) Vertreter: Grauel, Andreas

(56) Entgegenhaltungen:
- EP-A2- 1 473 535
- WO-A1-88/06230
- WO-A1-2006/074779
- WO-A1-2008/002221
- DE-A1- 2 411 225
- DE-C- 899 909
- FR-A1- 2 637 549
- GB-A- 2 025 520
- US-B1- 6 230 832

## Beschreibung

Die Erfindung betrifft eine Kühlluftführung innerhalb eines einen Verbrennungsmotor beherbergenden Motorraums eines Kraftfahrzeuges nach dem Oberbegriff des Patentanspruchs 1.

Für Fahrzeuge mit Verbrennungsmotoren bedeuten die gesetzlichen Emissionsvorschriften sowie die steigenden Motorleistungen eine erhöhte Anforderung an die Kühlleistung. Diesen Anforderungen wird beispielsweise mit größeren Kühlanlagen sowie höheren Kühllüfterleistungen begegnet. Der maximalen Größe der Kühlanlage in einem Fahrzeug sind jedoch enge Grenzen durch die zur Verfügung stehenden Bauräume gesetzt. Ferner ist eine beliebige Steigerung der Kühllüfterleistung aus energetischer Sicht ab einem bestimmten Punkt nicht mehr sinnvoll, da die benötigte Energie vom Verbrennungsmotor selbst zur Verfügung gestellt werden muss.

Die DE 102005001959 A1 beispielsweise offenbart eine Kühlluftführung für einen in einem Motorraum angeordneten Verbrennungsmotor einer Sattelzugmaschine mit Frontienkerfahrerhaus, umfassend eine im Bereich der Sattelzugmaschinenfront angeordnete Einlassöffnung zur Zuführung von Kühlluft. Vorgesehen ist, dass zur wenigstens teilweisen Durchströmung eines den Verbrennungsmotor aufnehmenden Motorraumes mit einem Kühlluftstrom eine erste Strömungsverbindung zwischen der wenigstens einen Einlassöffnung und dem Motorraum und eine zweite Strömungsverbindung zwischen dem Motorraum und einer im Bereich der Rückwand des Fahrerhauses in die Umgebung mündenden Auslassöffnung vorgesehen ist.

Die gattungsgemäße US 6 230 832 B1 offenbart einen Lastkraftwagen mit einem Kühlergrill als Lufteinlass zur Kühlung des Verbrennungsmotors.

Der vorliegenden Erfindung liegt die Aufgabe zugrunde, die Kühlluftführung in einem Kraftfahrzeug derart zu verbessern, dass die Kühlluft möglichst verlustfrei durch den Motorraum geleitet werden kann und dabei gleichzeitig die Rezirkulation der heißen Abluft vor das Kühlmodul unterbindet. Gleichzeitig soll die störende Schallübertragung vom Motorraum in die Fahrzeugkabine bzw. in die unmittelbare Umgebung verringert werden.

Diese Aufgabe wird gelöst durch eine Kühlluftführung mit den Merkmalen des Anspruchs 1.

Die Kühlluftführung innerhalb eines einen Verbrennungsmotor beherbergenden Motorraums eines Kraftfahrzeuges, wobei in Luftströmungsrichtung hinter einem Wärmeübertrager eine Lüfterhaube angeordnet ist, welche an dem Wärmeübertrager befestigt ist und eine kreisförmige Zarge aufweist, innerhalb welcher ein vom Verbrennungsmotor mechanisch angetriebener Axiallüfter zur Förderung des Luftstromes durch den Wärmeübertrager umläuft, sieht vor, dass sich an der Zarge ein von der Zarge Richtung Motorraum erstreckendes Luftleitelement anschließt, wobei das Luftleitelement dergestalt ausgebildet ist, dass es sich zumindest bereichsweise über einen Teilbereich des Verbrennungsmotors erstreckt. Das Luftleitelement schließt sich unmittelbar an den Lüfterzargenring an und führt die Luft der Formgebung des Luftleiterelements entsprechend definiert um den Motorblock. Das Luftleielement kann sich teilweise oder vollständig um den Motorblock bzw. um Bereiche des Motorblocks erstrecken. Beispielsweise kann sich das Luftleitelement ausgehend von der Zarge über- und/oder unterhalb des Lüfters in Richtung des Motorblocks erstrecken. Somit ist es möglich mit einem einzigen Bauteil die Leistungsfähigkeit des Lüfters zu erhöhen, den Strömungswiderstand des Motorraumes für die Kühlluft zu verringern sowie die Kühlleistung im Bereich des Motorblocks zu erhöhen. Ferner kann durch eine zusätzliche Umkapselung des Motorblocks bzw. Bereichen des Motorblocks eine Verbesserung der Fahrzeugakustik realisiert werden.

Eine Ausführungsform sieht vor, dass das Luftleitelement tunnelartig, mit Seitenwänden und einem die Seitenwände verbindendem Deckenbereich, ausgebildet sein kann. Beispielsweise kann das Luftleitelement im Anschlussbereich der Zarge mit einem im Wesentlichen halbrunden Querschnitt versehen sein. Es kann ferner vorgesehen sein, dass das Luftleitelement in weiterer Erstreckung in Richtung Motorblock in einen Bereich übergeht, weicher einen im Wesentlichen rechteckigen Querschnitt aufweist. Grundsätzlich kann vorgesehen sein, dass die Formgebung des Luftleitelements entsprechend den Abströmbedingungen des Lüfters an diesen angepasst werden kann, um Strömungsablösungen hinter dem Lüfter zu verhindern. Beispielsweise kann das Luftleitelement eine diffusorartige Formgebung bzw. durch entsprechende Formgebung diffusorartige Eigenschaften aufweisen.

Beispielsweise kann das Luftleitelement flexible Eigenschaften aufweisen und/oder aus einem flexiblen Material bestehen. Die Ausbildung aus einem flexiblen Material hätte den Vorteil, dass eine einfachere Zugänglichkeit zum Motorraum bzw. zum Motorblock gewährleistet werden kann, da das Luftleitelement im Bedarfsfall beispielsweise in Richtung der Zarge umgestülpt werden könnte.

Beispielsweise kann es sich bei dem flexiblen Material um Kunststoff, Gummi oder ein Gummigemisch handeln, um nur eine kleine Auswahl zu nennen.

Eine Ausführungsform sieht vor, dass das Luftleitelement aus einem festen unbiegsamen und somit im Wesentlichen steifen Material bestehen kann. Beispielsweise kann es sich bei dem festen Material um Kunststoff, Metall oder eine Metalllegierung handeln, um nur eine kleine Auswahl zu nennen. Beispielsweise kann das Luftleitelement im Spritzgussverfahren oder in Stanztechnik hergestellt sein. Bevorzugt, jedoch keinesfalls zwingend, kann das Luftleitelement einstückig ausgebildet sein.

Eine weitere Ausführungsform sieht vor, dass das Luftleitelement schallisolierende Eigenschaften aufweisen bzw. aus einem schallisolierenden Werkstoff hergestellt sein kann. Das schallisolierende Material kann beispielsweise durch schäumen vorgesehen sein. Insbesondere im Hinblick auf eine Verbesserung der Fahrzeugakustik kann der Einsatz eines schallisolierenden Materials von besonderem Vorteil sein.

Eine bevorzugte Ausführungsform sieht vor, dass auf der Innenseite des Luftleitelements Luftführungselemente angeordnet sein können, wobei die Luftführungselemente dergestalt ausgebildet sind, dass die Strömungsei-genschaften des durch das Luftleitelement umgeleiteten Luftstromes beeinflussbar sind. Beispielsweise können die Luftführungselemente dafür sorgen, dass ein eventuell vorhandener Drall aus der Strömung herausgenommen wird. Dies führt zu einer weiteren Effizienzsteigerung des Kühllüfters.

Beispielsweise können die Luftführungselemente einstückig mit dem Luftleitelement hergestellt sein. Ebenfalls ist denkbar, dass die Luftführungselemente als separate Bauteile ausgebildet sind, die mittel- oder unmittelbar mit dem Luftleitelement verbunden werden.

Eine weitere bevorzugte Ausführungsform sieht vor, dass das Luftleitelement im Bereich der Seitenwände und/oder des Deckenbereichs mit zumindest einer Durchtrittsöffnung versehen sein kann, wobei durch die Durchtrittsöffnung beispielsweise Kabel, Schläuche oder dergleichen verlaufen können. Besteht das Luftleitelement aus einem festen Material können zusätzliche Dichtmittel vorgesehen sein, um die Durchtrittsöffnung bezogen auf den Luftstrom abzudichten. Besteht das Luftleitelement aus einem flexiblen Material kann vorgesehen sein, dass das flexible Material in der Lage ist die mit Schläuchen oder Kabeln bestückte Durchtrittsöffnung bezogen auf den Luftstrom abzudichten, so dass auf separate Dichtmittel verzichtet werden kann.

Beispielsweise können die Durchtrittsöffnungen auch der Befestigung des Luftleitelements an einer Umgebungsstruktur oder Karosserieteilen des Fahrzeuges dienen. Beispielsweise können die Durchtrittsöffnungen dem Durchtritt von Schrauben, Kammern oder ähnlichem dienen.

Das Luftleitelement hat eine im Wesentlichen geschlossene dichte Struktur, insbesondere um die Rezirkulation von heißer Luft vor das Kühlmodul zu verhindern. Die dichte Struktur kann lediglich von den vorhandenen Durchtrittsöffnungen oder weiteren einbaubedingten Ausnehmungen, welche entsprechend abgedichtet werden, durchbrochen werden.

Eine weitere bevorzugte Ausführungsform sieht vor, dass am Luftleitelement und/oder am Boden der Fahrzeugkabine beweglich gelagerte Abdichtelemente vorgesehen sind, wobei die Abdichtelemente das Luftleitelement gegen den Boden, oder umgekehrt, den Boden gegen das Luftleitelement, abdichten. Beispielsweise können die Abdichtelemente klappenartig ausgebildet und federnd gelagert sein. Dadurch wird eine sichere Abdichtung im Betrieb innerhalb des Federwegs der Kabine gewährleistet. An den seitlichem Bereichen bzw. Seitenwänden kann die Abdichtung beispielsweise direkt zum Fahrzeugrahmen hin oder gegebenenfalls zu einer bereits vorhandenen Motorkapselung erfolgen. Durch entsprechende flexible Formgebung kann sich das Luftleitelement beispielsweise abdichtend an entsprechende Anschlussbereiche anschließen.

Weitere Vorteile, Merkmale und Einzelheiten der Erfindung ergeben sich aus der nachfolgenden Beschreibung, in der unter Bezugnahme auf die Zeichnungen ein Ausführungsbeispiel der Erfindung beschrieben ist. Dabei könnein die in den Ansprüchen und in der Beschreibung erwähnten Merkmale jeweils einzeln für sich oder in beliebiger Kombination erfindungswesentlich sein.

Es zeigen:
- **Fig. 1**: eine schematisch dargestellte Kühlluftführung innerhalb eines einen Verbrennungsmotor aufnehmenden Motorraums eines Kraftfahrzeuges;
- **Fig. 2**: eine schematische Rückansicht ausgehend vom Wärmeübertrager auf das Luftleitelement gem. Fig. 1;
- **Fig. 3**: eine schematisch perspektivische Ansicht des Luftleitelements gem. der Fig. 1 bis 3.

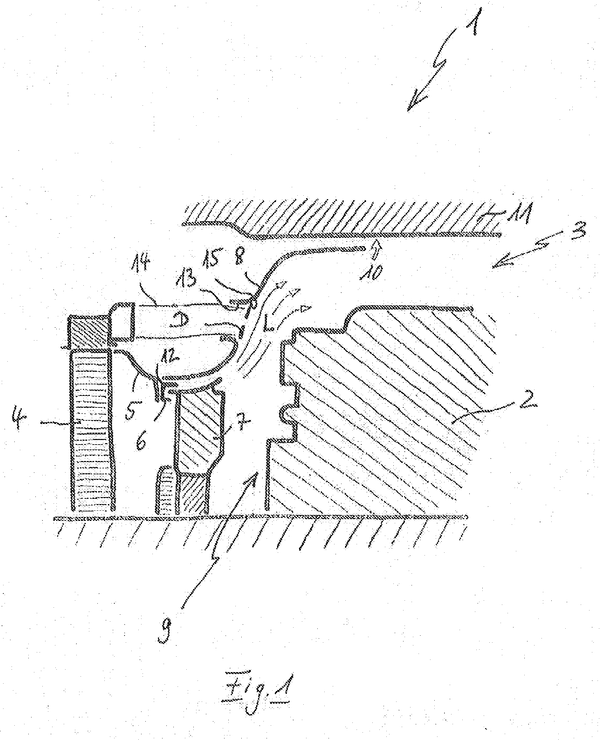

Fig. 1 zeigt eine schematisch dargestellte Kühlluftführung 1 innerhalb eines einen Verbrennungsmotor 2 aufnehmenden Motorraums 3 eines Kraftfahrzeuges, wobei in Luftströmungsrichtung hinter einem Wärmeübertrager 4 eine Lüfterhaube 5 angeordnet ist, welche an dem Wärmeübertrager 4 befertigt ist und eine kreisförmige Zarge 6 aufweist, innerhalb welcher ein von einem Verbrennungsmotor mechanisch angetriebener Axiallüfter 7 zur Förderung des Luftstromes L durch den Wärmeübertrager 4 umläuft.

An der Zarge 6 schließt sich ein von der Zarge 6 Richtung Motorraum 3 erstreckendes Luftleitelement 8 an, wobei sich das Luftleitelement 8 bereichsweise über einen Teilbereich 9 des Verbrennungsmotors 2 erstreckt.

Das Luftleitelement 8 schließt im oberen Bereich 10 an die Kabine 11 des Kraftfahrzeuges an bzw. kann dort im Wesentlichen abdichtend zur Anlage gebracht werden.

Das Luftleitelement 8 schließt sich unmittelbar an den Lüfterzargenring 12 an und führt den Luftstrom L durch eine im Wesentlichen diffusorartige Formgebung zum die Verbrennungsmaschine 2. Ferner wird durch die spezielle Formgebung des Luftleitelements 8 eine Rezirkulation des heißen Luftstromes L vor den Wärmeübertrager 4 verhindert. Das Luftleitelement ist mit zumindest einer Durchtrittsöffnung 13 versehen, wobei die Durchtrittsöffnung 13 dem Durchtritt eines Schlauches 14 dient. Dichtmittel D im Mündungsbereich 15 des Schlauches 14 verhindern einen Durchtritt von heißer Luft in Richtung des Wärmeübertragers 4.

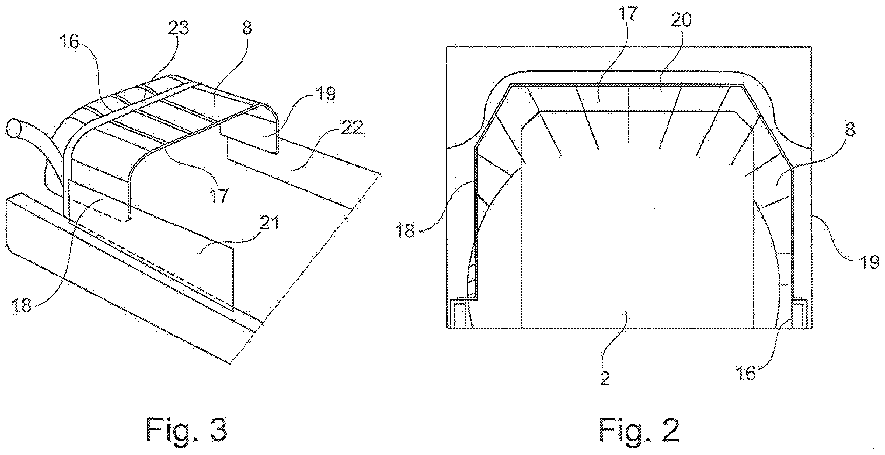

Fig. 2 zeigt eine schematisch dargestellte Rückansicht ausgehend vom nicht dargestellten Wärmeübertrager auf das Luftleitelement 8 gem. Fig. 1. Das tunnelartige Luftleitelement 8 weist im Anschlussbereich der Zarge einen im Wesentlichen halbrunden Querschnitt 16 auf, wobei der Querschnitt des Luftleitelements 8 im weiteren Verlauf in Richtung der Verbrennungsmaschine 2 in einen im Wesentlichen rechteckigen Querschnitt 17 übergeht.

Das Luftleitelement 8 weist Seitenwänden 18, 19 und einen die Seitenwände 18, 19 verbindenden Deckenbereich 20 auf. Die Seitenwände 18, 19 und der Deckenbereich 20 erstrecken sich zumindest bereichsweise über die Verbrennungsmaschine 2.

Fig. 3 zeigt das Luftleitelement 8 in schematisch perspektivischer Darstellung. Das Luftleitelement 8 schließt mit den Seitenwänden 18, 19 an Bauteilein 21, 22 des Fahrzeugrahmens an. Zu erkennen ist der Übergangsbereich 23 vom halbrunden Querschnitt 16 zum im Wesentlichen rechteckigen Querschnitt 17.

## Patentansprüche

1. Kühlluftführung (1) innerhalb eines einen Verbrennungsmotor (2) beherbergenden Motorraums (3) eines Kraftfahrzeuges, wobei in Luftströmungsrichtung hinter einem Wärmeübertrager (4) eine Lüfterhaube (5) angeordnet ist, welche an dem Wärmeübertrager (4) befestigt ist und eine kreisförmige Zarge (6) aufweist, innerhalb welcher ein von einem Verbrennungsmotor mechanisch angetriebener Axiallüfter (7) zur Förderung des Luftstromes (L) durch den Wärmeübertrager (4) umläuft, **dadurch gekennzeichnet, dass** sich an der Zarge (6) ein von der Zarge (6) Richtung Motorraum (3) erstreckendes Luftleitelement (8) anschließt, wobei das Luftleitelement (8) dergestalt ausgebildet ist, dass es sich zumindest bereichsweise über einen Teilbereich des Verbrennungsmotors (2) erstreckt.

2. Kühlluftführung nach Anspruch 1, **dadurch gekennzeichnet, dass** das Luftleitelement (8) tunnelartig, mit Seitenwänden (18, 19) und einem die Seitenwände (18, 19) verbindendem Deckenbereich (20), ausgebildet ist.

3. Kühlluftführung nach einem der Ansprüche 1 oder 2, **dadurch gekennzeichnet, dass** das Luftleitelement (8) flexible Eigenschaften aufweist und/oder aus einem flexiblen Material besteht.

4. Kühlluftführung nach Anspruch 3, **dadurch gekennzeichnet, dass** das flexible Material Kunststoff, Gummi oder ein Gummigemisch ist.

5. Kühlluftführung nach einem der Ansprüche 1 oder 2, **dadurch gekennzeichnet, dass** das Luftleitelement (8) aus einem festen Material besteht.

6. Kühlluftführung nach Anspruch 5, **dadurch gekennzeichnet, dass** das feste Material Kunststoff, Metall oder eine Metalllegierung ist.

7. Kühlluftführung nach einem der Ansprüche 1 bis 6, **dadurch gekennzeichnet, dass** das Luftleitelement (8) schallisolierende Eigenschaften aufweist.

8. Kühlluftführung nach einem der Ansprüche 1 bis 7, **dadurch gekennzeichnet, dass** auf der Innenseite des Luftleitelements (8) Luftführungselemente angeordnet sind, wobei die Luftführungselemente dergestalt ausgebildet sind, dass die Strömungseigenschaften des durch das Luftleitelement umgeleiteten Luftstromes (L) beeinflussbar sind.

9. Kühlluftführung nach Anspruch 8, **dadurch gekennzeichnet, dass** die Luftführungselemente einstückig mit dem Luftleitelement (8) hergestellt sind.

10. Kühlluftführung nach Anspruch 8, **dadurch gekennzeichnet, dass** die Luftführungselemente als separate Bauteile ausgebildet sind, die mittel- oder unmittelbar mit dem Luftleitelement (8) verbunden werden.

11. Kühlluftführung nach Anspruch 2, , **dadurch gekennzeichnet, dass** das Luftleitelement (8) im Bereich der Seitenwände (18, 19) und/oder des Deckenbereichs (20) mit zumindest einer Durchtrittsöffnung (13) versehen ist.

12. Kühlluftführung nach einem der Ansprüche 1 bis 11, **dadurch gekennzeichnet, dass** am Luftleitelement (8) und/oder am Boden der Fahrzeugkabine (11) beweglich gelagerte Abdichtelemente vorgesehen sind, wobei die Abdichtelemente das Luftleitelement (8) gegen den Boden, oder umgekehrt, den Boden gegen das Luftleitelement (8), abdichten.

13. Kühlluftführung nach Anspruch 12, **dadurch gekennzeichnet, dass** die Abdichtelemente klappenartig ausgebildet sind.

14. Kühlluftführung nach einem der Ansprüche 12 oder 13, **dadurch gekennzeichnet, dass** die Abdichtelemente federnd gelagert sind.

## Claims

1. A cooling air guide (1) within an engine compartment (3) of a motor vehicle containing an internal combustion engine (2), wherein a fan guard (5) is arranged in the air flow direction downstream of a heat exchanger (4) and is fixed on the heat exchanger (4) and has a circular frame (6) within which an axial fan (7) which is mechanically driven by an internal combustion engine circulates in order to promote the air flow (L) through the heat exchanger (4), **characterised in that** an air conduction element (8) extending from the frame (6) in the direction of the engine compartment (3) is attached on the frame (6), wherein the air conduction element (8) is formed such that it extends over a subsection of the internal combustion engine (2) at least in regions.

2. The cooling air guide as claimed in claim 1, **characterised in that** the air conduction element (8) is tunnel-shaped, with side walls (18, 19) and a ceiling area (20) connecting the side walls (18, 19).

3. The cooling air guide as claimed in one of claims 1 or 2, **characterised in that** the air conduction element (8) has flexible characteristics and/or consists of a flexible material.

4. The cooling air guide as claimed in claim 3, **characterised in that** the flexible material is plastic, rubber or a rubber mixture.

5. The cooling air guide as claimed in one of claims 1 or 2, **characterised in that** the air conduction element (8) consists of a solid material.

6. The cooling air guide as claimed in claim 5, **characterised in that** the solid material is plastic, metal or a metal alloy.

7. The cooling air guide as claimed in one of claims 1 to 6, **characterised in that** the air conduction element (8) has soundproofing characteristics.

8. The cooling air guide as claimed in one of claims 1 to 7, **characterised in that** air guide elements are arranged on the inside of the air conduction element (8), wherein the air guide elements are formed such that the flow characteristics of the air flow (L) diverted through the air conduction element can be influenced.

9. The cooling air guide as claimed in claim 8, **characterised in that** the air guide elements are integral with the air conduction element (8).

10. The cooling air guide as claimed in claim 8, **characterised in that** the air guide elements are formed as separate components which are indirectly or directly connected to the air conduction element (8).

11. The cooling air guide as claimed in claim 2, **characterised in that** the air conduction element (8) is provided with at least one opening (13) in the region of the side walls (18, 19) and/or the ceiling area (20).

12. The cooling air guide as claimed in one of claims 1 to 11, **characterised in that** movably mounted sealing elements are provided on the air conduction element (8) and/or on the bottom of the vehicle cabin (11), wherein the sealing elements seal the air conduction element (8) against the bottom, or, reversely, seal the bottom against the air conduction element (8).

13. The cooling air guide as claimed in claim 12, **characterised in that** the sealing elements are flap-shaped.

14. The cooling air guide as claimed in one of claims 12 or 13, **characterised in that** the sealing elements are resiliently mounted.

## Revendications

1. Guidage d'air de refroidissement (1) à l'intérieur d'un compartiment moteur (3) d'un véhicule automobile, logeant un moteur à combustion interne (2), où un capot de ventilateur (5) est disposé derrière un échangeur de chaleur (4), dans la direction d'écoulement de l'air, capot de ventilateur qui est fixé sur l'échangeur de chaleur (4) et présente une virole (6) de forme circulaire, virole à l'intérieur de laquelle tourne un ventilateur axial (7) entraîné mécaniquement par un moteur à combustion interne et servant au transport du flux d'air (L) à travers l'échangeur de chaleur (4), **caractérisé en ce qu'**un élément déflecteur d'air (8) s'étendant en direction du compartiment moteur (3), à partir de la virole (6), se rattache à la virole (6), où l'élément déflecteur d'air (8) est conçu de manière telle, qu'il s'étende au moins partiellement sur une zone partielle du moteur à combustion interne (2).

2. Guidage d'air de refroidissement selon la revendication 1, **caractérisé en ce que** l'élément déflecteur d'air (8) est conçu en forme de tunnel, en ayant des parois latérales (18, 19) et une zone de recouvrement (20) reliant les parois latérales (18, 19).

3. Guidage d'air de refroidissement selon l'une des revendications 1 ou 2, **caractérisé en ce que** l'élément déflecteur d'air (8) présente des propriétés flexibles et / ou se compose d'une matière flexible.

4. Guidage d'air de refroidissement selon la revendication 3, **caractérisé en ce que** la matière flexible est de la matière plastique, du caoutchouc ou un mélange de caoutchouc.

5. Guidage d'air de refroidissement selon l'une des revendications 1 ou 2, **caractérisé en ce que** l'élément déflecteur d'air (8) se compose d'une matière solide.

6. Guidage d'air de refroidissement selon la revendication 5, **caractérisé en ce que** la matière solide est de la matière plastique, du métal ou un alliage de métaux.

7. Guidage d'air de refroidissement selon l'une quelconque des revendications 1 à 6, **caractérisé en ce que** l'élément déflecteur d'air (8) présente des propriétés d'isolation contre le bruit.

8. Guidage d'air de refroidissement selon l'une quelconque des revendications 1 à 7, **caractérisé en ce que** des éléments de guidage d'air sont disposés sur le côté intérieur de l'élément déflecteur d'air (8), où les éléments de guidage d'air sont conçus de manière telle, que les propriétés d'écoulement du flux d'air (L) dévié par l'élément déflecteur d'air puissent être influencées.

9. Guidage d'air de refroidissement selon la revendication 8, **caractérisé en ce que** les éléments de guidage d'air sont fabriqués en formant une seule et même pièce avec l'élément déflecteur d'air (8).

10. Guidage d'air de refroidissement selon la revendication 8, **caractérisé en ce que** les éléments de guidage d'air sont configurés comme des composants séparés qui sont reliés indirectement ou directement à l'élément déflecteur d'air (8).

11. Guidage d'air de refroidissement selon la revendication 2, **caractérisé en ce que** l'élément déflecteur d'air (8) est doté, dans la zone des parois latérales (18, 19) et / ou de la zone de recouvrement (20), d'au moins une ouverture de passage (13).

12. Guidage d'air de refroidissement selon l'une quelconque des revendications 1 à 11, **caractérisé en ce qu'**il est prévu, sur l'élément déflecteur d'air (8) et / ou sur le plancher de la cabine du véhicule (11), des éléments d'étanchéité montés de façon mobile, où les éléments d'étanchéité assurent l'étanchéité de l'élément déflecteur d'air (8) par rapport au plancher, ou bien inversement, assurent l'étanchéité du plancher par rapport à l'élément déflecteur d'air (8).

13. Guidage d'air de refroidissement selon la revendication 12, **caractérisé en ce que** les éléments d'étanchéité sont conçus comme des volets.

14. Guidage d'air de refroidissement selon l'une des revendications 12 ou 13, **caractérisé en ce que** les éléments d'étanchéité sont montés de façon élastique.
